# EUROPEAN PATENT SPECIFICATION

(11) **EP 2 537 655 B1**
(45) Date of publication and mention of the grant of the patent: **25.02.2015**
(21) Application number: 11847681.1
(22) Date of filing: 08.11.2011
(51) Int. Cl.: B28B 11/02, B01D 39/20, B25J 13/08

(54) **DEVICE FOR CONVEYING HONEYCOMB STRUCTURAL BODY, METHOD FOR SEALING HONEYCOMB STRUCTURAL BODY, AND METHOD FOR PRODUCING HONEYCOMB STRUCTURAL BODY**
VORRICHTUNG ZUR FÖRDERUNG EINES WABENSTRUKTURKÖRPERS, VERFAHREN ZUR ABDICHTUNG DES WABENSTRUKTURKÖRPERS UND VERFAHREN ZUR HERSTELLUNG DES WABENSTRUKTURKÖRPERS
DISPOSITIF POUR TRANSPORTER UN CORPS STRUCTURAL EN NID-D'ABEILLES, PROCÉDÉ POUR L'ÉTANCHÉITÉ D'UN CORPS STRUCTURAL EN NID-D'ABEILLES ET PROCÉDÉ DE PRODUCTION D'UN CORPS STRUCTURAL EN NID-D'ABEILLES

(30) Priority: 07.12.2010 JP 2010272770
(43) Date of publication of application: 26.12.2012
(73) Proprietor: Sumitomo Chemical Company Limited, Tokyo 104-8260 (JP)
(72) Inventor: MORI Masaharu, Niihama-shi Ehime 792-8521 (JP); GONG Ying, Niihama-shi Ehime 792-8521 (JP)
(74) Representative: Vossius & Partner
(86) International application number: PCT/JP2011/075746
(87) International publication number: WO 2012/077449

(56) References cited:
- EP-A1- 1 180 485
- WO-A1-2012/105420
- WO-A1-2012/105421
- WO-A2-2006/069006
- JP-A- 2002 018 759
- JP-A- 2008 055 347
- JP-A- 2009 006 628
- US-A1- 2007 114 700

## Description

### Technical Field

The present invention relates to a conveying apparatus for a honeycomb structure and a method for plugging the honeycomb structure.

### Background Art

A honeycomb filter for use as a diesel particulate filter (DPF) or the like has been widely known. The honeycomb filter is configured such that one end of each of some of a large number of through-holes in a honeycomb structure is plugged with a plugging material, while the other end of each of the remaining through-holes is plugged with the plugging material. Japanese Examined Patent Publication JP 63-24731 B discloses a method for manufacturing such a honeycomb filter. According to the method described in JP 63-24731 B, a piston 8 is used to press a plugging material into through-holes at one end surface of a honeycomb structure 1 arranged in a cylinder 7, via a plugging mask with through-holes corresponding to positions which are to be plugged. Thus, the plugging material is fed to the ends of desired through-holes in the honeycomb structure.

### Summary of Invention

### Technical Problem

Each of the through-holes in the honeycomb structure has a small diameter. The diameter of each of the through-holes in the plugging mask is comparable to the diameter of each of the through-holes in the honeycomb structure. Thus, when the through-holes in the honeycomb structure are correctly superimposed on the through-holes in the mask, it is difficult to view the contour of an outer wall of the honeycomb structure and the contour of the through-holes through the openings in the plugging mask. Thus, aligning the through-holes in the honeycomb structure with the through-holes in the plugging mask is conventionally very difficult.

The present invention has been developed in view of the above-described problems. An object of the present invention is to provide a conveying apparatus for a honeycomb structure which allows the through-holes in the honeycomb structure to be accurately aligned with the through-holes in the plugging mask, a method for plugging the honeycomb structure, and a method for manufacturing the honeycomb structure.

### Solution to Problem

A conveying apparatus for a honeycomb structure according to an aspect of the present invention includes a hand that is capable of gripping the columnar honeycomb structure arranged in a vertical direction, an arm that holds the hand at an end thereof, an arm turning section that turns the arm around at least one vertical axis, a hand rotating section that rotates the hand around the vertical axis with respect to the arm, a camera that takes an image of an end surface of the honeycomb structure gripped by the hand, an initial rotation angle recognizing section that recognizes, based on the image obtained by the camera, an initial rotation angle of the honeycomb structure around the vertical axis at a reference position where the image has been taken, an arm turning control section that drives the arm turning section to convey the honeycomb structure gripped by the hand from the reference position to above the plugging mask, a required rotation angle acquiring section that acquires a hand rotation angle required to adjust the rotation angle of the honeycomb structure on the plugging mask to a desired final rotation angle based on the initial rotation angle recognized at the reference position and a conveying rotation angle of the honeycomb structure around the vertical axis associated with the driving of the arm turning section from the reference position to above the plugging mask, and a hand rotation control section that drives the hand rotating section based on the required hand rotation angle to rotate the honeycomb structure.

According to the conveying apparatus for the honeycomb structure, the gripped honeycomb structure can be arranged on the plugging mask at a desired rotation angle. Thus, the plugging mask can be easily aligned with the honeycomb structure.

According to the conveying apparatus for the honeycomb structure, the arm may include a first arm that is capable of turning around the vertical axis and a second arm that is capable of turning around the vertical axis with respect to the first arm, and the arm turning section may turn the first arm and the second arm. Thus, the hand can be more freely moved.

According to the conveying apparatus for the honeycomb structure, the camera may take an image of a lower end surface of the honeycomb structure. This allows an image of the end surface to be easily taken with the honeycomb structure remaining gripped by the hand. Thus, the present invention increases angle detection accuracy and alignment accuracy compared to the case in which the honeycomb structure is released from the hand, subjected to image taking, then gripped by the hand again.

A method for plugging a honeycomb structure according to an aspect of the present invention includes a step of allowing a hand provided at an end of an arm to grip the columnar honeycomb structure arranged in a vertical direction, a step of taking an image of an end surface of the honeycomb structure gripped by the hand, a step of recognizing, based on the image, an initial rotation angle of the honeycomb structure around a vertical axis at a reference position where the image has been taken, a step of turning the arm around at least one vertical axis to convey the honeycomb structure gripped by the hand from the reference position to above a plugging mask, a step of acquiring a hand rotation angle required to adjust the rotation angle of the honeycomb structure on the plugging mask to a desired final rotation angle based on the initial rotation angle recognized at the reference position and a conveying rotation angle of the honeycomb structure around the vertical axis associated with the conveyance from the reference position to above the plugging mask, a step of rotating the hand with respect to the arm based on the required hand rotation angle, a step of loading the honeycomb structure conveyed to above the plugging mask onto the plugging mask after the rotation of the hand, and a step of feeding a plugging material to the honeycomb structure via the loaded plugging mask.

The method for manufacturing the honeycomb structure according to the above description further comprising a step of arranging the columnar honeycomb structure with at least one through-hole in a vertical direction, and a step of drying the honeycomb structure.

According to the method for manufacturing the honeycomb structure, in the step of acquiring the hand rotation angle, the hand rotation angle may be acquired based on a difference between the desired final rotation angle and a combined value of the initial rotation angle and the conveying rotation angle.

According to the method for manufacturing the honeycomb structure, in the step of feeding the plugging material, the plugging material may be fed exclusively to though-holes which lie opposite the holes in the plugging mask, of the plurality of through-holes in the honeycomb structure.

According to the method for manufacturing the honeycomb structure, the step of rotating the hand may be carried out after the step of conveying the honeycomb structure to above the plugging mask. The step of rotating the hand may be carried out during the step of conveying the honeycomb structure to above the plugging mask. Alternatively, the step of rotating the hand may be carried out before the step of conveying the honeycomb structure to above the plugging mask.

According to the method for manufacturing the honeycomb structure, in the step of arrangement, the unbaked honeycomb structure is arranged in the vertical direction, and in the step of drying, the unbaked honeycomb structure may be baked.

### Advantageous Effects of Invention

According to the conveying apparatus for the honeycomb structure, the method for plugging the honeycomb structure, and the method for manufacturing the honeycomb structure as described above, the through-holes in the honeycomb structure can be accurately aligned with the through-holes in the plugging mask. An image of the end surface of the honeycomb structure is taken with the honeycomb structure remaining gripped by the hand, and the honeycomb structure remaining gripped by the hand is moved to the plugging portion. This enables a reduction in time required for the steps.

### Brief Description of Drawings

[Figure 1] Figure 1 is a schematic perspective view showing a conveying apparatus, a feeding apparatus, and a plugging apparatus according to an embodiment.
[Figure 2] Figure 2 is a block diagram showing a configuration of a controller and peripheral sections thereof in Figure 1.
[Figure 3] Figure 3 (a) is a top view showing a rotating state of a honeycomb structure 70 which corresponds to a reference, and Figure 3(b) is a top view showing that the honeycomb structure 70 is rotated by an angle θ.
[Figure 4] Figure 4(a) is a schematic cross-sectional view showing the plugging apparatus, and Figure 4(b) is a schematic cross-sectional view continued from Figure 4(a) and showing an operation of the plugging apparatus.
[Figure 5] Figure 5 is a perspective view continued from Figure 1 and showing a method for plugging a honeycomb structure according to an embodiment.
[Figure 6] Figure 6 is a perspective view continued from Figure 5 and showing the method for plugging the honeycomb structure according to the embodiment.

### Description of Embodiments

Preferred embodiments of a conveying apparatus for a honeycomb structure, a method for plugging the honeycomb structure, and a method for manufacturing the honeycomb structure will be described below in detail with reference to the drawings.

First, a honeycomb structure 70 to be conveyed will be described.

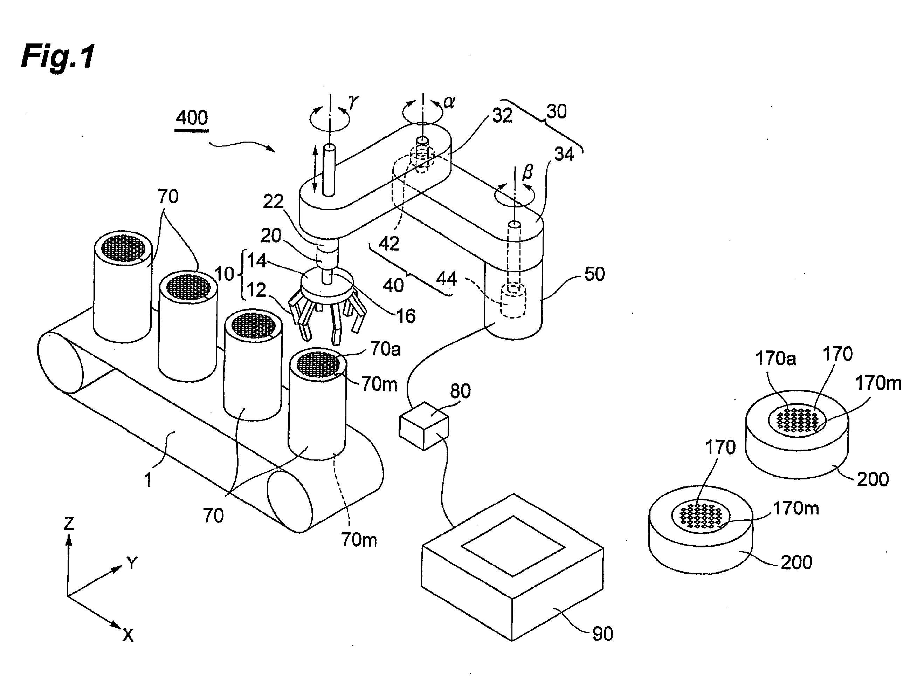

The honeycomb structure 70 according to the present embodiment is shaped like a column with a large number of through-holes 70a extending in a vertical direction and including an opening in both upper and lower end surfaces of the honeycomb structure 70 as shown in Figure 1. The external shape of the honeycomb structure 70 is not particularly limited. The external shape of the honeycomb structure 70 may be, for example, a cylinder, an elliptic cylinder, a polygonal column (for example, a regular polygonal column such as a regular triangular prism, a square cylinder, a regular hexagonal cylinder, or a regular octagonal cylinder, or a polygonal column other than the regular polygonal columns, such as a triangular prism, a quadrangular prism, a hexagonal cylinder, or an octagonal cylinder). The cross-sectional shape of each of the through-holes 70a is not particularly limited. The cross-sectional shape of each of the through-hole 70a may be a polygon such as a circle, an ellipse, a square, a rectangle, a triangle, or a hexagon. The through-holes 70a may include those having different diameters or those having different cross-sectional shapes.

The form of arrangement of the through-holes 70a as seen from the upper or lower end surface of the honeycomb structure 70 is not particularly limited. The form of arrangement of the through-holes 70a may be, for example, a square arrangement in which the central axes of the through-holes 70a are positioned at the respective vertices of squares or a regular triangular arrangement in which the central axes of the through-holes 70a are arranged at the vertices of a regular triangle. The diameter of each of the through-holes 70a is not particularly limited. The diameter of the through-hole 70a may be such that for example, if the cross section is square, each side of the square is between 0.8 mm and 2.5 mm. A thickness of a partition wall that separates the through-holes 70a from each other is, for example, between 0.15 mm and 0.76 mm.

The length of the honeycomb structure 70 in a direction in which the through-hole 70a extends (the total length of the through-hole 70a in the vertical direction) is not particularly limited. The length in the direction in which the through-hole 70a extends may be, for example, between 40 mm and 350 mm. The outer diameter of the honeycomb structure 70 is not particularly limited. The outer diameter of the honeycomb structure 70 may be, for example, between 100 mm and 320 mm.

The honeycomb structure 70 is preferably a green body (unbaked body) that is converted into ceramics when subsequently baked, and particularly preferably a green body that is converted into porous ceramics when subsequently baked. The ceramics are not particularly limited. Examples of the ceramics include oxides such as aluminum oxide (alumina), silicon dioxide (silica), mullite, cordierite, glass, and aluminum titanate, silicon carbide, silicon nitride, and metal. The aluminum titanate may further contain magnesium and/or silicon. The honeycomb structure 70 may be sintered ceramics.

Now, a conveying apparatus 400 for the honeycomb structure will be described.

The conveying apparatus 400 is provided adjacent to a feeding apparatus 1 and a plugging apparatus 200. The feeding apparatus 1 feeds the honeycomb structure 70 to the conveying apparatus 400. The conveying apparatus 400 loads the honeycomb structure 70 fed by the feeding apparatus 1 onto a plugging mask 170 on the plugging apparatus 200 at a specified angle of rotation. The plugging apparatus 200 feeds the plugging material to one end surface of the honeycomb structure 70. According to the present embodiment, two plugging apparatuses 200 are provided in juxtaposition around the conveying apparatus 400. The conveying apparatus 400 according to the present embodiment is a robotic conveying system.

The conveying apparatus 400 mainly includes a hand 10, an arm 30, an arm turning section 40, a hand rotating section 20, a hand lifting and lowering section 22, a camera 90, and a controller 80.

The hand 10 includes a base section 14 and a gripping member 12 fixed to the base section 14. The gripping member 12 grips the columnar honeycomb structure 70 arranged along the vertical direction so as to retain this direction. Specifically, for example, the gripping member 12 can grip the upper portion of side surface of the honeycomb structure 70 using a plurality of finger members. A vertical rotating shaft 16 is connected to the hand 10.

The arm 30 includes a second arm 32 and a first arm 34. The hand 10 is fixed to one end of the second arm 32 via the hand rotating section 20. The hand rotating section 20 rotates the hand 10 around the vertical rotating shaft 16 with respect to the second arm 32.

The vertical rotating shaft 16 further includes the hand lifting and lowering section 22 that moves the vertical rotating shaft 16 up and down.

The other end of the second arm 32 is connected to one end of the first arm 34 by a second arm turning section 42. The second arm turning section 42 turns the second arm 32 around the vertical axis with respect to the first arm 34.

The other end of the first arm 34 is connected to a base 50 by a first arm turning section 44. The first arm turning section 44 turns the first arm 34 around the vertical axis with respect to the base 50.

The second arm turning section 42 and the first arm turning section 44 form the arm turning section 40.

The camera 90 is located at a position where the camera 90 can take an image of an end surface of the hand 10 gripping the honeycomb structure 70. Preferably, the camera 90 is located at a position where the camera 90 can take an image of a lower end surface of the hand 10 gripping the honeycomb structure 70.

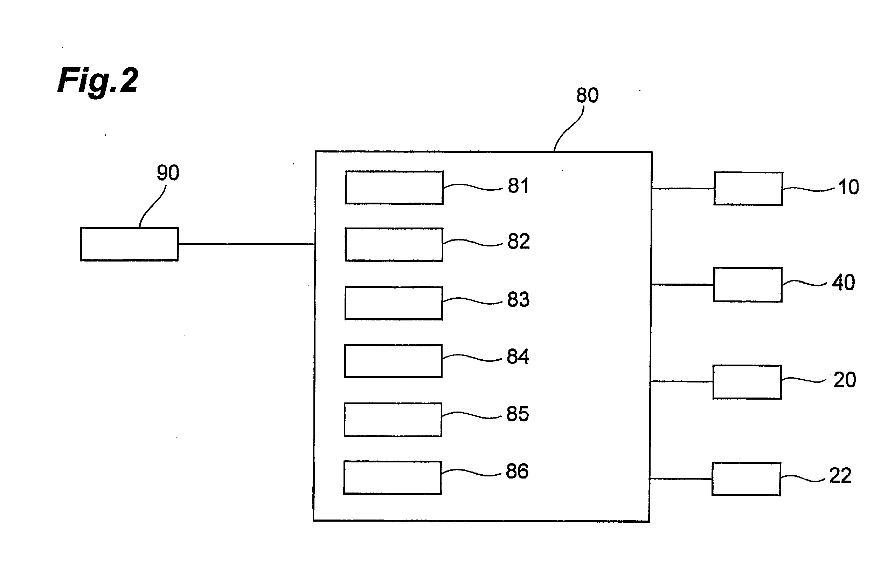

As shown in Figure 2, the controller 80 is connected to the hand 10, the arm turning section 40, the hand rotating section 20, the hand lifting and lowering section 22, and the camera 90. The controller 80 is normally formed with a computer and can provide the following functions.

A gripping and initial movement section 81 drives the arm turning section 40 and the hand 10 to grip the honeycomb structure 70 fed by the feeding apparatus 1. Then, the gripping and initial movement section 81 conveys the honeycomb structure 70 to a position above the camera 90 (this position is hereinafter sometimes referred to as a reference position).

An initial rotation angle recognizing section 82 takes an image of the end surface of the honeycomb structure 70 using the camera 90. Based on the image taken by the camera 90, the initial rotation angle recognizing section 82 recognizes the initial rotation angle θ of the honeycomb structure 70 gripped by the hand 10, around the vertical axis at the reference position where the image has been taken.

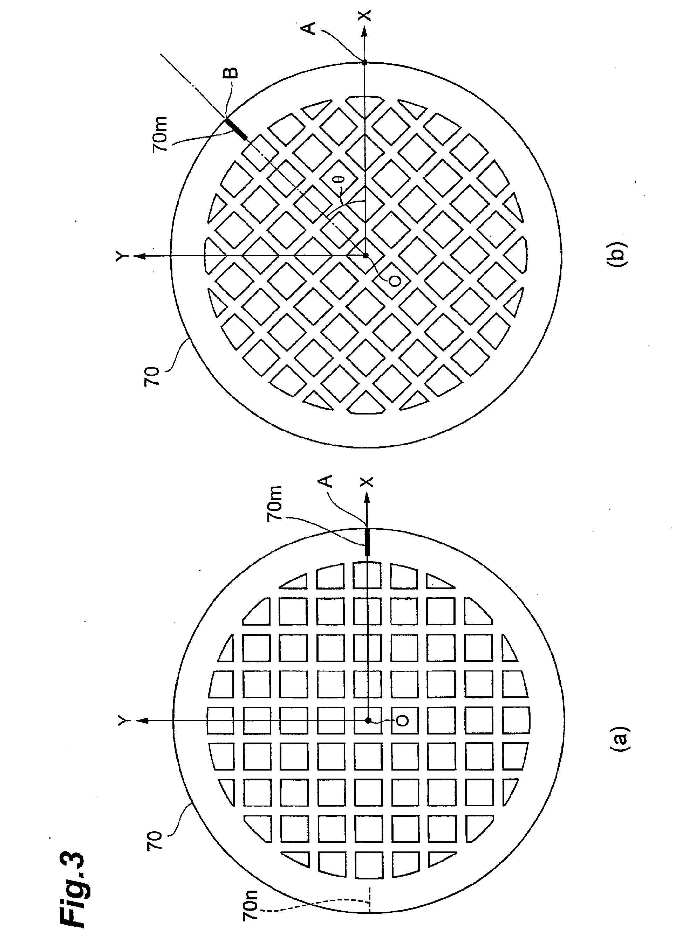

The rotation angle refers to through what angle the honeycomb structure 70 has rotated around the center of rotation with respect to the reference rotating state around the vertical axis. For example, the state in Figure 3(a) is assumed to be the reference rotating state of the honeycomb structure 70. To allow the rotating state to be easily determined, a mark 70m (or an orientation flat (OF)) is provided on a peripheral portion of the honeycomb structure 70. Then, the reference rotating state is defined as a state in which the mark 70m is located an X axis passing through the center of rotation O. If the mark 70m on the honeycomb structure 70 is located at a position B as shown in Figure 3(b), the rotation angle θ may be defined as the angle between the X axis and a straight line joining the center O and the position B together. The initial rotation angle θ is the rotation angle corresponding to the reference position above the camera 90.

A well-known image processing method may be used as a method for recognizing the initial rotation angle 0 based on the image from the camera 90. The method is not particularly limited. For example, the mark 70m is pre-provided, for example, on the peripheral portion of the end surface of the honeycomb structure 70. The mark 70m and the center of rotation O are extracted from the image. Then, the initial rotation angle θ with respect to the predefined reference state can be acquired based on the angle between the line joining the mark 70m and the center of rotation O together and the reference direction, for example, the X axis. The following method is also possible. A mark 70n is provided opposite the mark 70m across the center of rotation O. The initial rotation angle θ is determined based on the angle between the reference direction and a line joining the marks 70m and 70n together.

The initial rotation angle θ can be obtained without the mark 70m. For example, if the honeycomb structure 70 has a non-circular external shape such as a rectangle, the contour of the honeycomb structure 70 is extracted by image processing. Then, the initial rotation angle θ can be determined based on, for example, a line joining vertices. Or, for example, the direction in which the through-holes 70a are arranged in the honeycomb structure 70 is recognized by image processing. Then, based on the angle between the recognized direction and the X axis, the initial rotation angle θ of the honeycomb structure 70 can be recognized.

The arm turning control section 83 drives the arm turning section 40 to convey the honeycomb structure 70 gripped by the hand 10, from the reference position (above the camera) to above the plugging mask 170. Specifically, the relative positional relationship between the reference position and the position of the plugging mask 170 is previously known, and thus the above-described conveyance can be easily carried out by appropriately setting turning angles α and β for the second arm turning section 42 and the first arm turning section 44. That is, it is easy to align the honeycomb structure 70 and the plugging mask 170 with each other at a position in the XY direction that is other than the position corresponding to the rotation angle.

The required rotation angle acquiring section 84 acquires a rotation angle required to set the final rotation angle of the honeycomb structure above the plugging mask 170 to the desired value. At this time, the rotation angle is acquired based on the initial rotation angle δ recognized at the reference position and the rotation angle (α and β) of the honeycomb structure 70 around the vertical axis associated with the driving of the arm turning section from the reference position to above the plugging mask.

It is assumed that as shown in Figure 1, the plugging mask 170 includes a mark 170m in a peripheral portion thereof and that the final rotation angle of the honeycomb structure 70 above the plugging mask 170 needs to be adjusted such that the mark 170m aligns with the mark 70m on the honeycomb structure 70. A rotation angle similar to the rotation angle of the honeycomb structure 70 may be set for the plugging mask 170. Here, the rotation angle of the plugging mask 170 set in the plugging apparatus 200 is denoted by φ. In this case, the final rotation angle at which the honeycomb structure 70 is to finally be set is the angle φ.

The initial rotation angle of the honeycomb structure 70 at the reference position above the camera 90 is denoted by 9. The turning angle of the second arm turning section 42 driven by the arm turning control section 83 is denoted by α. The turning angle of the first arm turning section 44 by the first arm turning section 44 is denoted by β. The sum of the turning angles α and β is equal to a conveying rotation angle. The conveying rotation angle refers to the angle of the honeycomb structure 70 around the vertical axis associated with the conveyance from the reference position to above the plugging mask 170.

When the second arm 32 turns through the turning angle α, the honeycomb structure 70 fixed at a tip of the second arm 32 turns around the vertical axis (central axis) through the angle α in conjunction with the turning of the second arm 32. When the first arm 34 turns through the turning angle β, the honeycomb structure 70 further rotates through the angle β in conjunction with the turning of the first arm 34.

Thus, the conveyance from the reference position above the camera 90 to above the plugging mask 170 changes the rotation angle of the honeycomb structure 70 from the initial rotation angle θ by the conveying rotation angle (α + β). With the initial rotation angle θ and the final rotation angle φ taken into account, the hand 10 needs to be rotated through a hand rotation angle γ in order to adjust the rotation angle of the honeycomb structure 70 on the plugging mask 170 to the desired final rotation angle φ. The hand rotation angle γ is φ - (θ + α + β). That is, the hand rotation angle γ is acquired based on the difference between the final rotation angle φ and the combined value of the initial rotation angle θ and the conveying rotation angle (α + β).

A hand rotation control section 85 drives the hand rotating section 20 based on the required hand rotation angle γ to rotate the honeycomb structure 70.

A post-process instructing section 86 drives the hand lifting and lowering section 22 and the hand 10 after the hand 10 is rotated by the hand rotation control section 85, to lower the honeycomb structure 70 located above the plugging mask 170 onto the plugging mask 170. Then, the honeycomb structure 70 is released from the hand 10 and loaded onto the plugging mask 170. The honeycomb structure 70 may remain gripped by the hand 10 instead of being released from the hand 10.

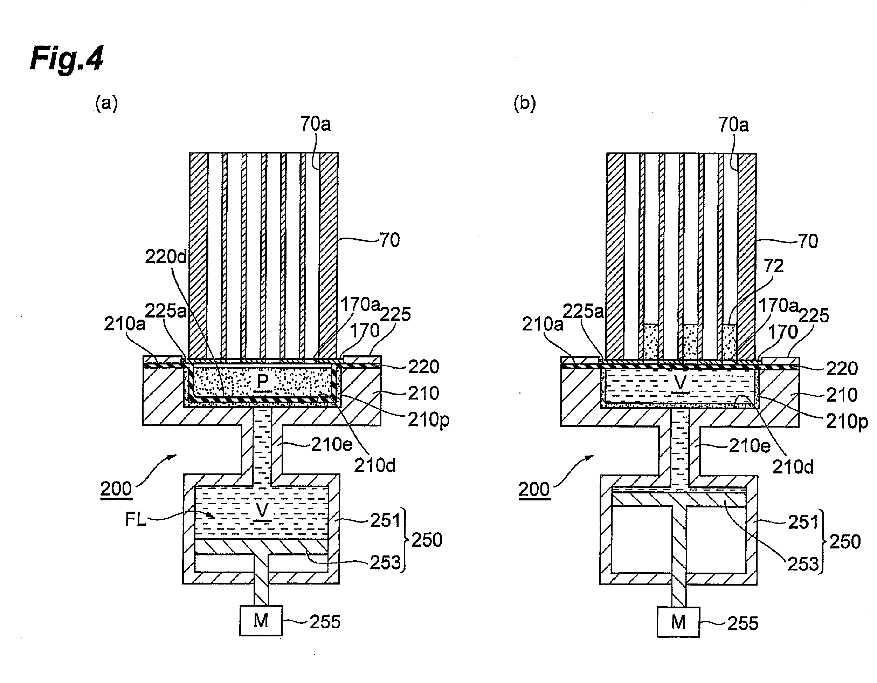

Now, an example of the plugging apparatus 200 will be described with reference to Figure 4.

The plugging apparatus 200 according to the present embodiment mainly includes a main body portion 210, an elastic plate 220, and a pump 250.

The main body portion 210 is a rigid member formed of metal (for example, a stainless steel material), a polymer material (for example, fiber reinforced plastic), or the like. A recess portion 210d is formed in the main body portion 210. A porous member 210p is applied to an inner surface of the recess portion 210d.

The elastic plate 220 is arranged on the main body portion 210 so as to cover an opening surface of the recess portion 210d. The elastic plate 220 is elastic and easily deformable. The elastic plate 220 is preferably, for example, a rubber plate.

The elastic plate 220 is fixed to the main body portion 210 by a ring member 225. The ring member 225 includes an opening 225a at a position corresponding to the recess portion 210d of the main body portion 210, and is thus shaped like a ring. The ring member 225 is arranged on the elastic plate 220 so as to expose a central portion of the elastic plate 220 (the portion opposite to the recess portion 210d).

The main body portion 210 further includes a communication passage 210e that communicates with the porous member 210p on the bottom surface of the recess portion 210d. The communication passage 210e is connected to the pump 250.

The pump 250 includes a cylinder 251 and a piston 253 arranged in the cylinder 251. The piston 253 is connected to a motor 255 that reciprocates the piston 253 in an axial direction.

According to the present embodiment, a closed space V is formed between the elastic plate 220 and the piston 253. The closed space V is formed by the main body portion 210, the communication passage 210e, and the cylinder 251. The closed space V is filled with a fluid FL such as a liquid.

The plugging apparatus 200 moves the piston 253 to discharge the fluid FL from the interior of the recess portion 210d of the main body portion 210. The elastic plate 220 thus comes into tight contact with the inner surface of the recess portion 210d to form a recess portion 220d of the elastic plate 220 (as shown in Figure 4(a)). Feeding the fluid FL into the recess portion 210d separates the elastic plate 220 from the bottom of the recess portion 210d (as shown in Figure 4(b)).

Now, a method for manufacturing a honeycomb filter according to the present embodiment will be described.

First, the plugging apparatus 200 is prepared. Specifically, as shown in Figure 4(a), the piston 253 is lowered to form the recess portion 220d of the elastic plate 220. A plugging paste P is stored in the recess portion 220d.

Subsequently, the plugging mask 170 is placed on the recess portion 210d of the main body portion 210. Holes 170a in the plugging mask 170 need to be positioned with respect to the honeycomb structure 70 so as to lie opposite to only those of the through-holes 70a of the ceramics honeycomb structure 70 which are to be plugged. According to the present embodiment, as shown in Figure 1, the plugging mask 170 includes a mark 170m in an outer peripheral portion thereof. The mark 170m is, for example, an orientation flat.

Then, once the preparation of the plugging apparatus 200 is completed, the feeding apparatus 1 conveys the honeycomb structures 70 to the vicinity of the conveying apparatus 400 as shown in Figure 1. At this time, the conveyed honeycomb structures 70 normally have different rotation angles.

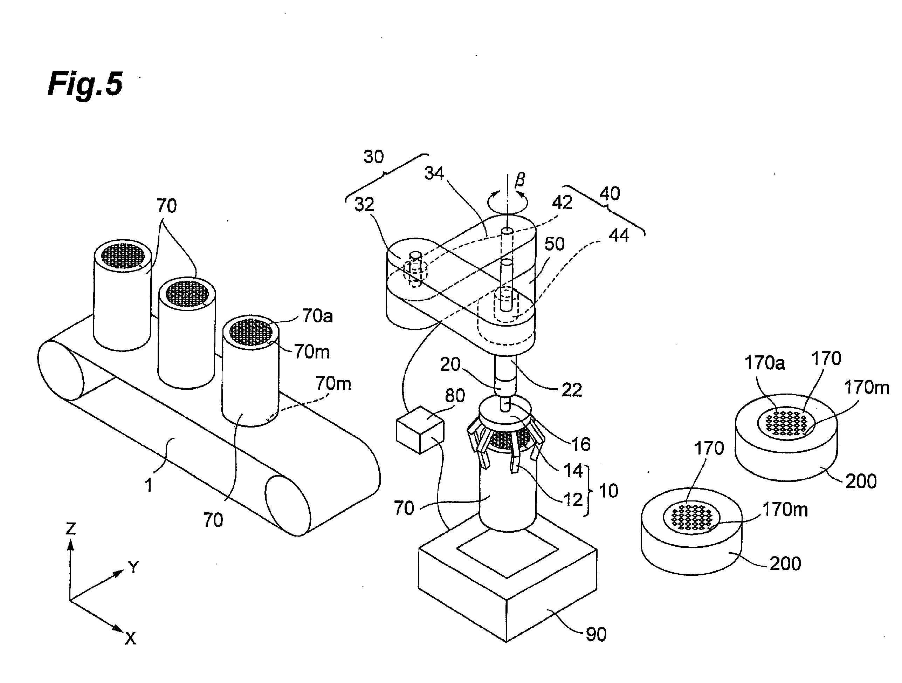

Subsequently, the gripping and initial movement section 81 of the controller 80 gives an instruction to drive the arm 30 and the hand 10. The hand 10 thus grips one of the honeycomb structures 70 and then conveys the honeycomb structure 70 above the camera 90 as shown Figure 5.

Then, the camera 90 takes an image of the end surface of the honeycomb structure 70.

Subsequently, based on the image from the camera 90, the initial rotation angle recognizing section 82 of the controller 80 recognizes the initial rotation angle θ of the honeycomb structure 70 gripped by the hand 10, around the vertical axis at the reference position where the image has been taken.

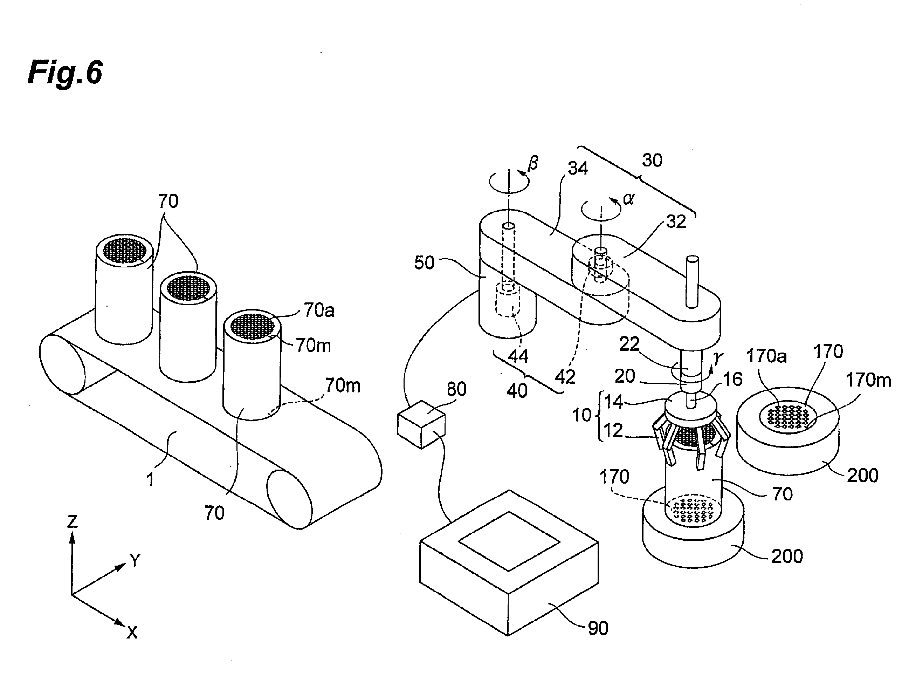

Subsequently, the arm turning control section 83 of the controller 80 drives the arm turning section 40 to convey the honeycomb structure 70 gripped by the hand 10, from the reference position above the camera 90 to above the plugging mask 170, as shown in Figure 6. For example, here, the second arm 32 is assumed to turn through the turning angle α, and the first arm 34 is assumed to turn through the turning angle β. The present embodiment involves a plurality of plugging apparatuses 200, and thus the honeycomb structure 70 may be conveyed to above the plugging mask 170 on the plugging apparatus 200 prepared for operation, as necessary.

Subsequently, the required rotation angle acquiring section 84 of the controller 80 acquires the hand rotation angle γ required to adjust the rotation angle of the honeycomb structure on the plugging mask 170 to the desired final rotation angle φ based on the initial rotation angle θ recognized at the reference position and the conveying rotation angle (α + β) of the honeycomb structure 70 around the vertical axis associated with the driving of the arm turning section 40 from the reference position to above the plugging mask 170. In the present example, the hand rotation angle γ is equal to φ - (θ + α + β).

Subsequently, the hand rotation control section 85 drives the hand rotation section 20 to rotate the honeycomb structure 70 based on the required hand rotation angle γ. Thus, the rotation angle of the honeycomb structure 70 on the plugging mask 170 is adjusted to the value φ. The alignment with the plugging mask 170 based on the rotation angle is then completed.

Subsequently, the post-process instructing section 86 drives the hand lifting and lowering section 22 and the hand 10 to lower the honeycomb structure 70 located above the plugging mask 170, onto the plugging mask 170. Moreover, the post-process instructing section 86 releases the honeycomb structure 70 from the hand 10 and loads the honeycomb structure 70 onto the plugging mask 170 (as shown in Figure 4(a)). The honeycomb structure 70 may remain gripped by the hand 10 instead of being released from the hand 10.

Subsequently, as shown in Figure 4(b), the piston of the pump 250 is moved upward to feed the fluid FL into the recess portion 210d, moving the elastic plate 220 toward the mask 170. Thus, the plugging material P is fed into some of the through-holes 70a in the ceramics honeycomb structure 70 via the through-holes 170a in the mask 170 to form plugged portions 72.

Subsequently, although not shown in the drawings, the piston 53 is further lifted to feed more fluid FL to between the elastic plate 220 and the main body portion 210, thus deforming the elastic plate 220 upward into a protruding shape to separate the elastic plate 220 from the ceramics honeycomb structure 70 and the mask 170. The following process may also be carried out as necessary. A reversing apparatus (not shown in the drawings) is used to turn the honeycomb structure upside down. A similar operation is then performed (setting a given initial rotation angle eliminates the need for image taking and the recognition of the initial rotation angle θ) to load the honeycomb structure 70 onto another plugging section 200. Then, the other surface of the ceramics honeycomb structure 70 is similarly plugged.

After the ceramics honeycomb structure 70 is plugged, the plugged ceramics honeycomb structure is dried and baked. The drying and baking allows a ceramics honeycomb filter to be completed. The ceramics honeycomb filter may be used, for example, as a diesel particulate filter.

At least two types of honeycomb structures may be plugged in order by the present apparatus by preparing a large number of plugging masks 170 of different types or forms and providing an apparatus for replacing the plugging mask 170 (not shown in the drawings).

According to the present embodiment, when the honeycomb structures 70 with different rotation angles are fed to above the plugging mask 170, the rotation angle of each of the honeycomb structures 70 can be easily adjusted to the desired value. Thus, the honeycomb structure 70 can be easily aligned with the plugging mask 170.

The conveying apparatus for the honeycomb structure, the method for plugging the honeycomb structure, and the method for manufacturing the honeycomb structure are not limited to the above-described embodiments but may be varied. For example, according to the above-described embodiments, the camera 90 is arranged away from the feeding apparatus 1. However, the bottom surface of the feeding apparatus 1 may be made transparent so that an image of the honeycomb structure 70 can be taken at a position where the honeycomb structure 70 on the feeding apparatus 1 is gripped by the hand 10.

According to the above-described embodiments, the hand rotating section 20 rotates the hand 10 based on the hand rotation angle γ after the honeycomb structure 70 is conveyed to above the plugging mask 170. However, the present invention is not limited to this configuration. For example, the hand rotating section 20 may rotate the hand 10 during or before the conveyance from the reference position to above the plugging mask 170. The hand rotating section 20 may rotate the hand 10 over any plural periods during or before the conveyance.

The arm 30 includes the second arm 32 and the first arm 34 which are capable of turning around the vertical axis. However, the first arm 34 may be exclusively provided and may include the vertical rotating shaft 16 and the hand 10. In this case, the hand rotation angle γ is, for example, φ - (θ + β). The present invention can be carried out even with at least three arms that are capable of turning around the vertical axis.

### Industrial Applicability

According to the conveying apparatus for the honeycomb structure, the method for plugging the honeycomb structure, and the method for manufacturing the honeycomb structure, the through-holes in the honeycomb structure can be easily and accurately aligned with the through-holes in the plugging mask. An image of the end surface of the honeycomb structure remaining gripped by the hand is taken, and the honeycomb structure is then moved to the plugging section. This enables a reduction in process time.

### Reference Signs List

10 ... hand, 20 ... hand rotating section, 30 ... arm, 32 ... second arm, 34 ... first arm, 40 ... arm turning section, 70 ... honeycomb structure, 80 ... controller, 82 ... initial rotation angle recognizing section, 83 ... arm turning control section, 84 ... required rotation angle acquiring section, 85 ... hand rotation control section, 90 ... camera, 170 ... plugging mask, 200 ... plugging apparatus, 400 ... conveying apparatus

## Claims

1. A conveying apparatus (400) for a columnar honeycomb structure (70), the apparatus comprising:
a hand (10) that is capable of gripping the columnar honeycomb structure arranged in a vertical direction;
an arm (30) that holds the hand (10) at an end thereof;
an arm turning section (40) that turns the arm (30) around at least one vertical axis;
a hand rotating section (20) that rotates the hand (10) around the vertical axis with respect to the arm (30);
a camera (90) that takes an image of an end surface of the honeycomb structure (70) gripped by the hand (10);
an initial rotation angle recognizing section (82) that recognizes, based on the image obtained by the camera (90), an initial rotation angle of the honeycomb structure (70) around the vertical axis at a reference position where the image has been taken;
an arm turning control section (83) that drives the arm turning section (40) to convey the honeycomb structure (70) gripped by the hand (10) from the reference position to above a plugging mask (170);
a required rotation angle acquiring section (84) that acquires a hand rotation angle required to adjust the rotation angle of the honeycomb structure (70) on the plugging mask (170) to a desired final rotation angle based on the initial rotation angle recognized at the reference position and a conveying rotation angle of the honeycomb structure (70) around the vertical axis associated with the driving of the arm turning section (40) from the reference position to above the plugging mask (170); and
a hand rotation control section (85) that drives the hand rotating section (20) based on the required hand rotation angle to rotate the honeycomb structure (170).

2. The apparatus according to Claim 1, wherein the arm (30) comprises a first arm (34) that is capable of turning around the vertical axis and a second arm (32) that is capable of turning around the vertical axis with respect to the first arm (34), and
the arm turning section (40) turns the first arm (34) and the second arm (32).

3. The apparatus according to Claim 1 or Claim 2, wherein the camera (90) takes an image of a lower end surface of the honeycomb structure (70).

4. A method for manufacturing a columnar honeycomb structure (70), the method comprising:
a step of allowing a hand (10) provided at an end of an arm (30) to grip the columnar honeycomb structure (70) arranged in a vertical direction;
a step of taking an image of an end surface of the honeycomb structure (70) gripped by the hand (10);
a step of recognizing, based on the image, an initial rotation angle of the honeycomb structure (70) around a vertical axis at a reference position where the image has been taken;
a step of turning the arm (30) around at least one vertical axis to convey the honeycomb structure (70) gripped by the hand (10) from the reference position to above a plugging mask (170);
a step of acquiring a hand rotation angle required to adjust the rotation angle of the honeycomb structure (70) on the plugging mask (170) to a desired final rotation angle based on the initial rotation angle recognized at the reference position and a conveying rotation angle of the honeycomb structure (70) around the vertical axis associated with the conveyance from the reference position to above the plugging mask (170);
a step of rotating the hand (10) with respect to the arm (30) based on the required hand rotation angle;
a step of loading the honeycomb structure (70) conveyed to above the plugging mask (170) onto the plugging mask (170) after the rotation of the hand (10); and
a step of feeding a plugging material to the honeycomb structure (70) via the loaded plugging mask (170).

5. The method for manufacturing the honeycomb structure (70) according to claim 4, further comprising:
a step of arranging the columnar honeycomb structure (70) with at least one through-hole in a vertical direction; and
a step of drying the honeycomb structure (70).

6. The method for manufacturing the honeycomb structure (70) according to Claim 5, wherein in the step of acquiring the hand rotation angle, the hand rotation angle is acquired based on a difference between the desired final rotation angle and a combined value of the initial rotation angle and the conveying rotation angle.

7. The method for manufacturing the honeycomb structure (70) according to Claim 5 or Claim 6, wherein in the step of feeding the plugging material, the plugging material is fed exclusively to through-holes which lie opposite the holes in the plugging mask (170), of the plurality of through-holes in the honeycomb structure (70).

8. The method for manufacturing the honeycomb structure (70) according to any one of Claims 5 to 7, wherein the step of rotating the hand (10) is carried out after the step of conveying the honeycomb structure (70) to above the plugging mask (170).

9. The method for manufacturing the honeycomb structure (70) according to any one of Claims 5 to 7, wherein the step of rotating the hand (10) is carried out during the step of conveying the honeycomb structure (70) to above the plugging mask (170).

10. The method for manufacturing the honeycomb structure (70) according to any one of Claims 5 to 7, wherein the step of rotating the hand (10) is carried out before the step of conveying the honeycomb structure (70) to above the plugging mask (170).

11. The method for manufacturing the honeycomb structure (70) according to any one of Claims 5 to 10, wherein in the step of arrangement, the unbaked honeycomb structure is arranged in the vertical direction, and
in the step of drying, the unbaked honeycomb structure is baked.

## Patentansprüche

1. Transportvorrichtung (400) für eine säulenförmige Wabenstruktur (70), wobei die Vorrichtung aufweist:
eine Hand (10), die die in senkrechter Richtung angeordnete säulenförmige Wabenstruktur ergreifen kann;
einen Arm (30), der die Hand (10) an einem Ende davon hält;
einen Armdrehungsabschnitt (40), der den Arm (30) um mindestens eine senkrechte Achse dreht;
einen Handrotationsabschnitt (20), der die Hand (10) um die senkrechte Achse im Hinblick auf den Arm (30) rotiert;
eine Kamera (90), die ein Bild einer Endfläche der durch die Hand (10) ergriffenen Wabenstruktur (70) aufnimmt;
einen Anfangsrotationswinkel-Erkennungsabschnitt (82), der auf der Grundlage des durch die Kamera (90) erhaltenen Bilds einen Anfangsrotationswinkel der Wabenstruktur (70) um die senkrechte Achse an einer Referenzposition erkennt, an der das Bild aufgenommen wurde;
einen Armdrehungs-Steuerabschnitt (83), der den Armdrehungsabschnitt (40) ansteuert, um die durch die Hand (10) ergriffene Wabenstruktur (70) von der Referenzposition zu einer Stelle über einer Schließmaske (170) zu transportieren;
einen Erfassungsabschnitt (84) für erforderliche Rotationswinkel, der einen Handrotationswinkel erfasst, der erforderlich ist, um den Rotationswinkel der Wabenstruktur (70) auf der Schließmaske (170) auf einen gewünschten Endrotationswinkel auf der Grundlage des an der Referenzposition erkannten Anfangsrotationswinkels und eines Transportrotationswinkels der Wabenstruktur (70) um die senkrechte Achse in Zuordnung zum Ansteuern des Armdrehungsabschnitts (40) von der Referenzposition zu der Stelle über der Schließmaske (170) einzustellen; und
einen Handrotations-Steuerabschnitt (85), der den Handrotationsabschnitt (20) auf der Grundlage des erforderlichen Handrotationswinkels ansteuert, um die Wabenstruktur (70) rotieren zu lassen.

2. Vorrichtung nach Anspruch 1, wobei der Arm (30) einen ersten Arm (34), der um die senkrechte Achse drehen kann, und einen zweiten Arm (32) aufweist, der um die senkrechte Achse im Hinblick auf den ersten Arm (34) drehen kann, und der Armdrehungsabschnitt (40) den ersten Arm (34) und den zweiten Arm (32) dreht.

3. Vorrichtung nach Anspruch 1 oder Anspruch 2, wobei die Kamera (90) ein Bild einer unteren Endfläche der Wabenstruktur (70) aufnimmt.

4. Verfahren zur Herstellung einer säulenförmigen Wabenstruktur (70), wobei das Verfahren aufweist:
einen Schritt des Ermöglichens, dass eine an einem Ende eines Arms (30) vorgesehene Hand (10) die in senkrechter Richtung angeordnete säulenförmige Wabenstruktur (70) ergreift;
einen Schritt des Aufnehmens eines Bilds einer Endfläche der durch die Hand (10) ergriffenen Wabenstruktur (70);
einen Schritt des auf der Grundlage des Bilds erfolgenden Erkennens eines Anfangsrotationswinkels der Wabenstruktur (70) um eine senkrechte Achse an einer Referenzposition, an der das Bild aufgenommen wurde;
einen Schritt des Drehens des Arms (30) um mindestens eine senkrechte Achse, um die durch die Hand (10) ergriffene Wabenstruktur (70) von der Referenzposition zu einer Stelle über einer Schließmaske (170) zu transportieren;
einen Schritt des Erfassens eines Handrotationswinkels, der erforderlich ist, um den Rotationswinkel der Wabenstruktur (70) auf der Schließmaske (170) auf einen gewünschten Endrotationswinkel auf der Grundlage des an der Referenzposition erkannten Anfangsrotationswinkels und eines Transportrotationswinkels der Wabenstruktur (70) um die senkrechte Achse in Zuordnung zum Transport von der Referenzposition zu der Stelle über der Schließmaske (170) einzustellen;
einen Schritt des Rotierens der Hand (10) im Hinblick auf den Arm (30) auf der Grundlage des erforderlichen Handrotationswinkels;
einen Schritt des Ladens der zu der Stelle über der Schließmaske (170) transportierten Wabenstruktur (70) auf die Schließmaske (170) nach der Rotation der Hand (10); und
einen Schritt des Zuführens eines Verschlussmaterials zur Wabenstruktur (70) über die beladene Schließmaske (170).

5. Verfahren zur Herstellung der Wabenstruktur (70) nach Anspruch 4, das ferner aufweist:
einen Schritt des Anordnens der säulenförmigen Wabenstruktur (70) mit mindestens einem Durchgangsloch in senkrechter Richtung; und
einen Schritt des Trocknens der Wabenstruktur (70).

6. Verfahren zur Herstellung der Wabenstruktur (70) nach Anspruch 5, wobei im Schritt des Erfassens des Handrotationswinkels der Handrotationswinkel auf der Grundlage einer Differenz zwischen dem gewünschten Endrotationswinkel und einem kombinierten Wert des Anfangsrotationswinkels und des Transportrotationswinkels erfasst wird.

7. Verfahren zur Herstellung der Wabenstruktur (70) nach Anspruch 5 oder Anspruch 6, wobei im Schritt des Zuführens des Verschlussmaterials das Verschlussmaterial ausschließlich Durchgangslöchern, die entgegengesetzt zu den Löchern in der Schließmaske (170) liegen, der mehreren Durchgangslöcher in der Wabenstruktur (70) zugeführt wird.

8. Verfahren zur Herstellung der Wabenstruktur (70) nach einem der Ansprüche 5 bis 7, wobei der Schritt des Rotierens der Hand (10) nach dem Schritt des Transportierens der Wabenstruktur (70) zu der Stelle über der Schließmaske (170) durchgeführt wird.

9. Verfahren zur Herstellung der Wabenstruktur (70) nach einem der Ansprüche 5 bis 7, wobei der Schritt des Rotierens der Hand (10) während des Schritts des Transportierens der Wabenstruktur (70) zu der Stelle über der Schließmaske (170) durchgeführt wird.

10. Verfahren zur Herstellung der Wabenstruktur (70) nach einem der Ansprüche 5 bis 7, wobei der Schritt des Rotierens der Hand (10) vor dem Schritt des Transportierens der Wabenstruktur (70) zu der Stelle über der Schließmaske (170) durchgeführt wird.

11. Verfahren zur Herstellung der Wabenstruktur (70) nach einem der Ansprüche 5 bis 10, wobei im Schritt des Anordnens die ungebrannte Wabenstruktur in senkrechter Richtung angeordnet wird und
im Schritt des Trocknens die ungebrannte Wabenstruktur gebrannt wird.

## Revendications

1. Dispositif de transport (400) pour une structure colonnaire en nid d'abeilles (70), ledit dispositif comprenant :
un préhenseur (10) prévu pour saisir la structure colonnaire en nid d'abeilles disposée verticalement ;
un bras (30) supportant le préhenseur (10) à une de ses extrémités ;
une section d'oscillation (40) de bras qui fait osciller le bras (30) autour d'au moins un axe vertical ;
une section de rotation (20) de préhenseur qui fait tourner le préhenseur (10) autour de l'axe vertical par rapport au bras (30) ;
une caméra (90) capturant une image d'une surface d'extrémité de la structure en nid d'abeilles (70) saisie par le préhenseur (10) ;
un section de détection (82) d'angle de rotation initial qui détecte sur la base de l'image de la caméra (90) un angle de rotation initial de la structure en nid d'abeilles (70) autour de l'axe vertical dans une position de référence où l'image a été capturée ;
une section de commande d'oscillation (83) de bras qui entraîne la section d'oscillation (40) de bras pour transporter la structure en nid d'abeilles (70) saisie par le préhenseur (10) de la position de référence à une position au-dessus d'un masque d'obturation (170) ;
une section d'acquisition (84) d'angle de rotation exigé qui acquiert un angle de rotation de préhenseur exigé pour régler l'angle de rotation de la structure en nid d'abeilles (70) sur le masque d'obturation (170) à un angle de rotation final souhaité sur la base de l'angle de rotation initial détecté dans la position de référence et d'un angle de rotation de transport de la structure en nid d'abeilles (70) autour de l'axe vertical, associé à l'entraînement de la section d'oscillation (40) de bras de la position de référence à la position au-dessus du masque d'obturation (170) ; et
une section de commande (85) de rotation de préhenseur qui entraîne la section de rotation (20) de préhenseur sur la base de l'angle de rotation de préhenseur exigé pour faire tourner la structure en nid d'abeilles (70).

2. Dispositif selon la revendication 1, où le bras (30) comprend un premier bras (34) prévu pour osciller autour de l'axe vertical, et un deuxième bras (32) prévu pour osciller autour de l'axe vertical par rapport au premier bras (34), et où
la section d'oscillation (40) de bras fait osciller le premier bras (34) et le deuxième bras (32).

3. Dispositif selon la revendication 1 ou la revendication 2, où la caméra (90) capture une image d'une surface d'extrémité inférieure de la structure en nid d'abeilles (70).

4. Procédé d'obturation d'une structure colonnaire en nid d'abeilles (70), ledit procédé comprenant :
une étape de déclenchement de la saisie de la structure colonnaire en nid d'abeilles (70) disposée verticalement par un préhenseur (10) prévu à une extrémité d'un bras (30) ;
une étape de capture d'une image d'une surface d'extrémité de la structure en nid d'abeilles (70) saisie par le préhenseur (10) ;
une étape de détection, sur la base de l'image, d'un angle de rotation initial de la structure en nid d'abeilles (70) autour d'un axe vertical dans une position de référence où l'image a été capturée ;
une étape d'entraînement en oscillation du bras (30) autour d'au moins un axe vertical pour transporter la structure en nid d'abeilles (70) saisie par le préhenseur (10) de la position de référence à la position au-dessus d'un masque d'obturation (170) ;
une étape d'acquisition d'un angle de rotation de préhenseur exigé pour régler l'angle de rotation de la structure en nid d'abeilles (70) sur le masque d'obturation (170) à un angle de rotation final souhaité sur la base de l'angle de rotation initial détecté dans la position de référence et d'un angle de rotation de transport de la structure en nid d'abeilles (70) autour de l'axe vertical, associé au transport de la position de référence à la position au-dessus du masque d'obturation (170) ;
une étape de rotation du préhenseur (10) par rapport au bras (30) sur la base de l'angle de rotation de préhenseur exigé ;
une étape de chargement sur le masque d'obturation (170) de la structure en nid d'abeilles (70) transportée vers la position au-dessus du masque d'obturation (170) après la rotation du préhenseur (10) ; et
une étape d'alimentation de la structure en nid d'abeilles (70) en matériau d'obturation par l'intermédiaire du masque d'obturation (170) chargé.

5. Procédé de fabrication de la structure en nid d'abeilles (70) selon la revendication 4, comprenant en outre :
une étape de disposition de la structure colonnaire en nid d'abeilles (70) avec au moins un trou débouchant dans le sens vertical ; et
une étape de séchage de la structure en nid d'abeilles (70).

6. Procédé de fabrication de la structure en nid d'abeilles (70) selon la revendication 5, où, lors de l'étape d'acquisition de l'angle de rotation de préhenseur, l'angle de rotation de préhenseur est acquis sur la base d'une différence entre l'angle de rotation final souhaité et d'une valeur combinée de l'angle de rotation initial et de l'angle de rotation de transport.

7. Procédé de fabrication de la structure en nid d'abeilles (70) selon la revendication 5 ou la revendication 6, où, lors de l'étape d'alimentation en matériau d'obturation, le matériau d'obturation est refoulé exclusivement dans des trous débouchants de la pluralité de trous débouchants de la structure en nid d'abeilles (70) qui sont opposés aux trous du masque d'obturation (170).

8. Procédé de fabrication de la structure en nid d'abeilles (70) selon l'une des revendications 5 à 7, où l'étape de rotation du préhenseur (10) est exécutée après l'étape de transport de la structure en nid d'abeilles (70) vers la position au-dessus du masque d'obturation (170).

9. Procédé de fabrication de la structure en nid d'abeilles (70) selon l'une des revendications 5 à 7, où l'étape de rotation du préhenseur (10) est exécutée pendant l'étape de transport de la structure en nid d'abeilles (70) vers la position au-dessus du masque d'obturation (170).

10. Procédé de fabrication de la structure en nid d'abeilles (70) selon l'une des revendications 5 à 7, où l'étape de de rotation du préhenseur (10) est exécutée avant l'étape de transport de la structure en nid d'abeilles (70) vers la position au-dessus du masque d'obturation (170).

11. Procédé de fabrication de la structure en nid d'abeilles (70) selon l'une des revendications 5 à 10, où, lors de l'étape de disposition, la structure en nid d'abeilles non cuite est disposée dans le sens vertical, et où,
lors de l'étape de séchage, la structure en nid d'abeilles non cuite est cuite.
